# EUROPÄISCHE PATENTSCHRIFT

(11) **EP 4 211 060 B1**
(45) Veröffentlichungstag und Bekanntmachung des Hinweises auf die Patenterteilung: **02.04.2025**
(21) Anmeldenummer: 21766503.3
(22) Anmeldetag: 07.09.2021
(51) Int. Cl.: B65G 11/02, B65G 47/256, B65G 47/76

(54) **VORRICHTUNG UND VERFAHREN ZUM FÖRDERN VON BEHÄLTERVERSCHLÜSSEN**
APPARATUS AND METHOD FOR CONVEYING CONTAINER CLOSURES
APPAREIL ET PROCÉDÉ PERMETTANT DE TRANSPORTER DES FERMETURES DE RÉCIPIENT

(30) Priorität: 08.09.2020 DE 102020123392
(43) Veröffentlichungstag der Anmeldung: 19.07.2023
(73) Patentinhaber: KHS GmbH, 44143 Dortmund (DE)
(72) Erfinder: JOST, Petra, 55593 Rüdesheim (DE); ECKES, Björn, 55543 Bad Kreuznach (DE)
(86) Internationale Anmeldenummer: PCT/EP2021/074574
(87) Internationale Veröffentlichungsnummer: WO 2022/053457

(56) Entgegenhaltungen:
- EP-A2- 0 037 947
- WO-A1-01/72614
- WO-A1-2005/003003
- DE-A1- 102006 039 091
- DE-B- 1 124 747
- JP-A- 2014 076 618
- US-A1- 2010 032 261
- US-A1- 2019 276 246

## Beschreibung

Die Erfindung bezieht sich auf eine Vorrichtung sowie auf ein Verfahren zum Fördern von Behälterverschlüssen, insbesondere von kappenartigen Verschlüssen zum Verschließen von Getränkebehältern, wie beispielsweise Schraubverschlüssen oder Kronenkorken.

Vorrichtungen zum Fördern von Behälterverschlüssen sind aus dem Stand der Technik hinreichend bekannt und werden beispielsweise in Behälterbehandlungsanlagen, insbesondere in Getränkeabfüllanlagen, als Zuführvorrichtungen zum Zuführen der kappenartigen Verschlüsse an eine Verschließmaschine eingesetzt.

Derartige Vorrichtungen, die in verschiedensten Ausführungen existieren, umfassen grundsätzlich einen Transport- oder Förderkanal, der die Behälterverschlüsse während des Transports bzw. während des Fördervorganges aufnimmt, wobei dem Förderkanal beispielsweise eine Verschlusszuführung vorgeschaltet ist, über die die Behälterverschlüsse in den Förderkanal gelangen. Zum Beispiel werden die Behälterverschlüsse von einem so genannten Sortierwerk aus einem Vorrat, zum Beispiel in ungeordneter Menge, entnommen bzw. aufgenommen und an die Fördervorrichtung derart übergeben, dass die Behälterverschlüsse in einer vorgegebenen Orientierung in den Förderkanal gelangen.

Da trotz dieser Ausrichtung und Vor-Orientierung der Behälterverschlüsse über das Sortierwerk nicht mit letzter Sicherheit auszuschließen ist, dass vereinzelte Behälterverschlüsse mit der falschen Orientierung in den Förderkanal gelangen, sind aus dem Stand der Technik Fördervorrichtungen bekannt geworden, die eine Ausschleusung fehlorientierter Behälterverschlüsse aus dem Förderkanal ermöglichen. Ein Beispiel einer derartigen Vorrichtung zum Ausschleusen von Behälterverschlüssen gibt die WO 2008/022735 A1 an.

In der Regel ist der Förderkanal bzw. dessen Querschnitt an die Dimension bzw. Form der zu fördernden Verschlüsse angepasst. Beispielsweise weist der Förderkanal dabei eine im Wesentlichen rechteckige Querschnittsform auf und ist so dimensioniert, dass die zu fördernden Behälterverschlüsse mit ihrer Oberseite sowie mit Seitenabschnitten in Anlage an einen Boden bzw. an Wandungen des Förderkanals gelangen, und somit geführt, insbesondere zwangsgeführt, transportiert werden.

Der Förderkanal einer entsprechenden Vorrichtung zum Fördern der Behälterverschlüsse zum Zuführen an eine Verschließmaschine ist üblicherweise ziemlich lang und kann daher eine Vielzahl von Behälterverschlüssen aufnehmen. Typischerweise hat der Förderkanal etwa eine solche Länge, dass insbesondere im Falle von zuzuführenden Kronenkorken mindestens 160 Behälterverschlüsse in dem Förderkanal aufgenommen sind. Unter Umständen kann es erforderlich sein, die im Förderkanal aufgenommenen Behälterverschlüsse aus dem Förderkanal heraus befördern bzw. ausschleusen zu müssen, z.B. wegen einer geplanten Reinigung der Anlage bzw. des Förderkanals und/oder wegen eines geplanten Wechsels der Verschlüsse.

Üblicherweise werden hierzu die Behälterverschlüsse durch einen "Trockenlauf" bzw. "Leerlauf" der Behälterbehandlungsanlage aus dem Förderkanal herausbefördert. Dies verursacht einen unnötigen Verschleiß und einen zusätzlichen Energieverbrauch. Außerdem können die Behälterverschlüsse beim Trockenlauf nicht gesammelt werden, sodass die Behälterverschlüsse auf den Boden fallen und daher aus hygienischen Gründen nicht wiederverwendet werden können.

Aus der WO 2017/174451 A1 ist beispielsweise auch bekannt geworden, für die Entleerung des Förderkanals eine mittels eines Drehgelenks verschwenkbare Auslassklappe an dem Förderkanal vorzusehen. Hierbei kann bei beschränkter räumlicher Zugänglichkeit und/oder unter räumlich eingeschränkten Bedingungen das nur auf manuelle Weise mögliche Verschwenken der Auslassklappe aus Platzgründen zu Problemen führen. Außerdem können auch hier die herausfallenden Behälterverschlüsse nur schwerlich oder gar nicht für die Wiederverwendung gesammelt werden.

Der Oberbegriff des Anspruchs 1 sowie des Anspruchs 17 wird in der DE 10 2006 039 091 A1 gezeigt, die eine Vorrichtung und ein Verfahren zum Zuführen von kappenartigen Schraubverschlüssen an eine Verschließmaschine offenbart. Die Vorrichtung weist einen Förderkanal auf, an dem eine von einer elektronischen Steuereinrichtung 11725 WO angesteuerte Ausschleus- oder Ausstoßstation vorgesehen ist, die aktiviert wird, wenn die Steuereinrichtung von einem Sensor ein Signal über einen falsch orientierten Schraubverschluss erhält. Die Ausschleus- oder Ausstoßstation der DE 10 2006 039 091 A1 umfasst einen schwenkbaren Ausstoßer, der gesteuert betätigt wird und der das Ausstoßen der falsch orientierten Schraubverschlüsse durch ein seitliches Öffnen des Förderkanals bewirkt.

Eine Aufgabe der vorliegenden Erfindung ist es, eine verbesserte Vorrichtung zum Fördern von Behälterverschlüssen aufzuzeigen, die die Nachteile der aus dem Stand der Technik bekannten Lösungen behebt und die bei einfacher konstruktiver Bauweise sowie unter erleichterter Bedienung eine Entleerung des Förderkanals erlaubt und insbesondere energiesparend und ressourcenschonend arbeitet.

Die vorliegende Erfindung löst die Aufgabe durch eine Vorrichtung mit den Merkmalen des Anspruchs 1 und durch ein Verfahren mit den Merkmalen des Anspruchs 17. Ferner ist Gegenstand der Erfindung eine Behälterbehandlungsanlage gemäß Anspruch 16. Vorteilhafte Weiterbildungen der Erfindung sind in den abhängigen Ansprüchen angegeben.

Die Erfindung stellt eine Vorrichtung zum Fördern von Behälterverschlüssen, insbesondere von Kronenkorken, bereit, die einen sich entlang einer Hauptachse erstreckenden Förderkanal mit zumindest einer einen Kanalboden bildenden Gleitfläche und mit wenigstens einer ersten und einer zweiten Führungsfläche umfasst, wobei die Führungsflächen zum Führen der in einer Förderrichtung geförderten Behälterverschlüsse gegenüberliegend seitlich entlang des Kanalbodens angeordnet sind. Die Vorrichtung weist dabei eine Ausleiteinrichtung zum Ausleiten der Behälterverschlüsse aus dem Förderkanal auf. Gemäß einem besonderen Aspekt der Erfindung umfasst die Ausleiteinrichtung zumindest eine Umlenkanordnung mit wenigstens einem drehbeweglichen Umlenkelement, wobei das Umlenkelement mittels Drehbewegung um eine Drehachse von wenigstens einer Grundstellung in zumindest eine Ausleitstellung bewegbar ist. Das Umlenkelement weist eine erste und zweite Wandung auf, wobei die Wandungen in der Grundstellung des Umlenkelements einen jeweiligen ersten und zweiten Führungsflächenabschnitt als Teil der ersten und zweiten Führungsfläche des Förderkanals bilden. In der Ausleitstellung gibt das Umlenkelement eine Auslassöffnung am Förderkanal frei. Erfindungsgemäß umfasst das Umlenkelement zumindest einen eine Grundkörperachse aufweisenden Grundkörper, wobei der Grundkörper dazu ausgebildet ist, zumindest ein den Kanalboden bildendes Bauteil des Förderkanals wenigstens abschnittsweise zu umgreifen und wobei der Grundkörper dazu innenseitig einen freien Raum zur wenigstens teilweisen Aufnahme des den Kanalboden bildenden Bauteils des Förderkanals aufweist.

Die vorliegende Vorrichtung wird beispielsweise als Anlagenteil, insbesondere als integrierter Anlagenteil in einer komplexen Behälterbehandlungsanlage, eingesetzt, vorzugsweise als Anlagenkomponente zum Zuführen von Behälterverschlüssen an einen Verschließer in einer Getränkeabfüllanlage. Ganz besonders vorteilhaft ermöglicht die vorliegende Vorrichtung, aufgrund der am Förderkanal vorgesehenen Ausleiteinrichtung ein einfaches und effektives Entleeren des Förderkanals durch besonders leichte Bedienung, nämlich durch eine Drehbewegung des Umlenkelements. Hierbei erfolgt die seitliche Ausleitung der Behälterverschlüsse über die durch das Umlenkelement seitlich am Förderkanal freigegebene Auslassöffnung derart gezielt und gerichtet, dass die Behälterverschlüsse an der vordefinierten Stelle, nämlich an der Auslassöffnung, den Förderkanal verlassen, und zwar insbesondere ausreichend geordnet, vorteilhaft immer noch in Reihe hintereinander, nämlich als einreihiger Behälterverschlussstrom, so dass die Behälterverschlüsse besonders vorteilhaft bei Austreten aus dem Förderkanal optional gesammelt werden können, beispielsweise mittels eines Sammelbehälters.

Im Verständnis der vorliegenden Erfindung sind die erste und zweite Führungsfläche jeweils mehrteilig ausgebildet und aus mehreren Abschnitten bzw. Teilen zusammengesetzt, wobei der jeweilige durch die erste bzw. zweite Wandung des Umlenkelements gebildete Führungsflächenabschnitt als ein Teil bzw. als ein Abschnitt der ersten bzw. zweiten Führungsfläche, insbesondere der zusammengesetzten bzw. gesamten ersten bzw. zweiten Führungsfläche, anzusehen ist. Insbesondere in der Grundstellung des Umlenkelementes sind die jeweiligen Führungsflächenabschnitte bündig in der ersten bzw. zweiten Führungsfläche integriert. Beispielsweise sind leistenförmige, sich parallel zur Hauptachse erstreckende Bauteile seitlich am Kanalboden und, bezogen auf die Hauptachse, sich gegenüberliegend angeordnet, wobei diese leistenförmigen Bauteile mit ihren einander zugewandten Seiten bzw. Oberflächen die jeweiligen Führungsflächen bilden.

Der Förderkanal im Sinne der vorliegenden Erfindung ist im Wesentlichen rinnen- oder kanalförmig ausgebildet, wobei ein Aufnahmeraum, in dem die Behälterverschlüsse zum Zwecke der Förderung aufgenommen sind, einen näherungsweise rechteckförmigen Querschnitt aufweist. Der Querschnitt des Aufnahmeraumes ist dabei so an die Dimension der Behälterverschlüsse, insbesondere Kronenkorken, angepasst, dass diese im Förderkanal unter Anlage an der den Kanalboden bildenden Gleitfläche sowie an den die seitlichen Wandungen bildenden Führungsflächen gleitend in Förderrichtung transportiert werden, wobei die Behälterverschlüsse dazu insbesondere in vorgegebener Weise orientiert sind und mit ihrer Oberseite am Kanalboden anliegen. Der Förderkanal weist beispielsweise eine entsprechende Länge auf, dass er mindestens etwa 160 Stück Behälterversschlüsse, insbesondere aneinandergereiht, aufnehmen kann. Der Förderkanal kann vorliegend auch als Transportkanal oder Führungskanal bezeichnet werden.

Mit der vorliegenden Erfindung brauchen vorteilhaft nur noch sehr wenige Behälterverschlüsse (beispielweise ca. 20 Stück) über einen Trockenlauf der Behälterbehandlungsanlage, insbesondere über einen Trockenlauf eines der Vorrichtung nachgeschalteten Verschließers, aus dem Förderkanal herausbefördert zu werden, und zwar nur diejenigen Behälterverschlüsse im Förderkanal, die sich ab dem Umlenkelement in Förderrichtung stromabwärts befinden. Alle übrigen Behälterverschlüsse (z.B. mind. 140 Stück) werden über die Ausleiteinrichtung und der damit vorgesehenen Auffangeinheit ausgeschleust und aufgefangen und können wiederverwendet werden. Besonders vorteilhaft ist hierzu die Ausleiteinrichtung möglichst nahe an einem Auslaufende des Förderkanals angeordnet, um so die Anzahl der "über Trockenlauf zu entleerenden" Behälterverschlüsse geringstmöglich zu halten.

Die vorliegende Vorrichtung bewirkt somit nicht nur ein besonders einfaches Leeren des Förderkanals, sondern auch eine deutliche Verringerung der über einen Trockenlauf bzw. Leerlauf herausgebrachten Verschlüsse, womit weniger Verschleiß, geringerer Energieverbrauch sowie die mögliche Wiederverwendung der ausgeleiteten Verschlüsse einhergehen. Insbesondere ist die Vorrichtung dabei auf konstruktiv einfache Weise und kostengünstig herstellbar, da Normteile und einfache Bauteile, wie Blechbiegeteile, gebogene Rohre und dergleichen verwendet werden können. Neben einer einfachen Montage ist hierbei insbesondere auch eine breite Einsatzmöglichkeit gegeben, da die Vorrichtung nicht auf spezielle Ausführungen und Materialien von Behälterverschlüssen beschränkt ist.

Das drehbewegliche Umlenkelement ist mittels der Drehbewegung von der Grundstellung in die Ausleitstellung bewegbar, wobei durch die Drehung letztlich ein Umstellen bzw. Wechseln der Richtung des Behälterverschlussstroms erfolgt, und zwar werden die Behälterverschlüsse ausgehend von ihrer Bewegung in Förderrichtung umgelenkt oder umgeleitet in eine Bewegung in einer Ausleit- bzw. Auslassrichtung. Es versteht sich, dass hierbei gleichzeitig ein Weitertransport der Behälterverschlüsse in Förderrichtung gesperrt ist.

Die Drehachse des drehbeweglichen Umlenkelements verläuft vorzugsweise im Wesentlichen senkrecht zur Gleitfläche des Förderkanals. Insbesondere ist hierunter zu verstehen, dass die Drehachse senkrecht bzw. im Wesentlichen senkrecht zu einer Ebene verläuft, in der die Gleitfläche des Förderkanals zu liegen kommt bzw. in der die Gleitfläche des Förderkanals aufgenommen ist. Vorzugsweise erfolgt die Drehbewegung zum Drehen des drehbeweglichen Umlenkelements von der Grundstellung in die Ausleitstellung in einer vorgegebenen Drehrichtung und über einen vorgegebenen Winkelabstand, wobei der Winkelabstand vorzugsweise kleiner als 90° ist, das heißt, die Drehung insbesondere kleiner als eine Vierteldrehung ist.

Vorteilhaft quert die zweite Wandung des drehbeweglichen Umlenkelements in der Ausleitstellung den Förderkanal und der zweite Führungsflächenabschnitt bildet dadurch eine Leitfläche, wobei die Leitfläche die Behälterverschlüsse aus der Förderrichtung in eine Auslassrichtung umleitet und dabei einen Weitertransport in Förderrichtung sperrt. Die Auslassrichtung ist vorzugsweise in einem spitzen Winkel zur Förderrichtung orientiert. Beispielsweise liegt der Winkel dabei in einem Bereich von 15° bis 75°, bevorzugt in einem Bereich von 25° bis 65° und insbesondere bevorzugt bei rund 30° oder bei rund 45°. Auch ist denkbar, dass die Auslassrichtung in einem rechten oder im Wesentlichen rechten Winkel zur Förderrichtung orientiert ist. Das Umlenkelement kann daher im vorliegenden Verständnis auch als weichenartiges Element bzw. als Weiche oder als Wechselglied oder aber als Sperrelement oder Sperrglied verstanden werden. Insbesondere sind die Behälterverschlüsse beim Ausleiten während ihrer Bewegung in Auslassrichtung zwischen dem ersten und zweiten Führungsflächenabschnitt des Umlenkelements geführt.

Gemäß einer bevorzugten Ausführungsvariante ist an dem Förderkanal ferner zumindest eine in Förderrichtung vor dem drehbeweglichen Umlenkelement angeordnete Stoppvorrichtung zum Stoppen der Behälterverschlüsse vorgesehen. Vorteilhaft kann darüber bei einem geplanten Wechsel der Verschlüsse oder vor einer anstehenden Anlagenreinigung der Förderkanal unter Vermeidung von Verklemmungen oder unerwünschter Staubildung besonders einfach und effektiv entleert werden.

Hierbei wird zunächst mittels der Stoppvorrichtung der Strom oder Fluss bzw. die Bewegung der Behälterverschlüsse in Förderrichtung angehalten, insbesondere gestoppt, solange das Umlenkelement in seiner Grundstellung ist. Anschließend werden alle in Förderrichtung stromabwärts der Stoppvorrichtung befindlichen Behälterverschlüsse über einen Leerlauf bzw. Trockenlauf des nachgeschalteten Verschließers herausgefahren. Dadurch können insbesondere unerwünschte Blockierungen bzw. Verklemmungen vermieden werden, die beim Drehen des Umlenkelements auftreten können, wenn dort während der Drehbewegung Behälterverschlüsse anwesend sind. Nach diesem leerlaufbedingten Entfernen der stromabwärts der Stoppvorrichtung im Förderkanal befindlichen Behälterverschlüsse wird das Umlenkelement durch Drehen in die Ausleitstellung bewegt und schließlich das über die Stoppvorrichtung bewirkte Anhalten bzw. Stoppen des Stroms der Behälterverschlüsse wieder aufgehoben, wodurch die Behälterverschlüsse in Auslassrichtung aus dem Förderkanal ausgeleitet und mittels der Auffangeinheit zum Sammeln und Wiederverwenden aufgefangen werden.

Bevorzugt kann die Stoppvorrichtung als ein schwenkbeweglich am Förderkanal befestigtes federartiges Klemmelement ausgebildet sein, welches insbesondere manuell betätigbar ist und beispielsweise von Hand durch Verschwenken so ausgerichtet werden kann, dass ein freies Halteende des federartigen Klemmelements aufgrund einer vorgegebenen Federkraft bzw. Spannkraft derart in den Aufnahmeraum des Förderkanals eingreift, dass die stromaufwärts befindlichen Behälterverschlüsse gestoppt bzw. in ihrer Bewegung in Förderrichtung angehalten werden.

Alternativ und ebenso bevorzugt kann die Stoppvorrichtung durch einen Verschlussstopper gebildet sein, der zumindest ein linear antreibbares Stoppelement umfasst, welches insbesondere bevorzugt mittels eines Spindelantriebs verstellt werden kann. In dieser Ausführungsform kann das Stoppelement beispielsweise angetrieben und dadurch in einer Richtung senkrecht zur Förderrichtung in den Aufnahmeraum des Förderkanals hineinbewegt werden, derart dass die stromaufwärts befindlichen Behälterverschlüsse gestoppt bzw. in ihrer Bewegung in Förderrichtung angehalten werden. **In** einer solchen Ausführungsvariante ist die Stoppvorrichtung insbesondere auch für eine automatisierte Betätigung bzw. für den automatisierten Betrieb geeignet.

Gemäß einer vorteilhaften Ausführungsform umfasst die Umlenkanordnung zumindest ein Feststell- oder Arretiermittel zum Feststellen des Umlenkelements in wenigstens der Grundstellung und/oder der Ausleitstellung. Darüber kann insbesondere vorteilhaft sichergestellt werden, dass keine zufällige, unbeabsichtigte Drehbewegung erfolgt, sondern die absichtlich und gezielt eingestellten Stellungen, nämlich Grundstellung und/oder Ausleitstellung gesichert werden können. Beispielsweise kann als Feststell- oder Arretiermittel ein über eine Flügelschraube gesicherter, in eine Hakenaufnahme des Umlenkelements eingreifender Haken verschwenkbar am Förderkanal befestigt sein, wobei der Haken nach Lösen der Flügelschraube verschwenkt werden kann, wodurch die Arretierung des Umlenkelements gelöst und dessen Verdrehen ermöglicht wird.

Ganz besonders bevorzugt weist die Ausleiteinrichtung eine Auffangeinheit zum Auffangen von aus der Auslassöffnung austretenden Behälterverschlüssen auf. Dadurch kann besonders vorteilhaft ein effektives, quantitatives Auffangen der ausgeleiteten, austretenden Behälterverschlüsse über die bei der Ausleiteinrichtung vorgesehene Auffangeinheit erfolgen. Durch die Auffangeinheit wird hierbei insbesondere bewirkt, dass die aufgrund der Entleerung des Förderkanals anfallenden, nämlich aus dem Förderkanal austretenden Behälterverschlüsse zur vollständigen Wiederverwendung gesammelt werden können, weshalb die Vorrichtung einen erheblichen Beitrag zur Abfallvermeidung leistet und damit förderlich für eine ressourcenschonende Betriebsweise ist.

Besondere Vorteile ergeben sich dadurch, dass die Auffangeinheit zumindest ein Fangrohrstück mit einer Auffangmündung aufweist, wobei das Fangrohrstück relativ zum Förderkanal so angeordnet und ausgerichtet ist, dass die Auffangmündung des Fangrohrstücks der in Ausleitstellung des Umlenkelements gebildeten Auslassöffnung für die Behälterverschlüsse zugewandt ist. Die Positionierung der Auffangmündung des Fangrohrstücks relativ zur Auslassöffnung des Förderkanals ist dabei so gewählt, dass die aus der Auslassöffnung austretenden bzw. herausfallenden Behälterverschlüsse sicher, insbesondere auch vollzählig, aufgefangen werden können.

Im Sinne der vorliegenden Erfindung kann das Fangrohrstück rinnen- oder rohrförmig sein, wobei neben einem Rohrkörper auch ein Rinnenkörper oder ein Teilrohr mit lediglich teilumfänglicher Rohrwandung als Fangrohrstück zu verstehen sind. Vorzugsweise kann an das Fangrohrstück, insbesondere an dessen der Auffangmündung gegenüberliegenden Ende, ein weiteres Element, beispielsweise ein flexibler Schlauch oder ein weiteres Rohr vorgesehen und befestigt werden, an das die aufgefangenen Behälterverschlüsse weitergeleitet werden und von dem aus die Behälterverschlüsse zu ihrer Wiederverwendung beispielsweise in einen Sammel- oder Vorratsbehälter gelangen.

Bevorzugt ist hierbei die Auffangeinheit verstellbar, insbesondere höhen- und/oder winkelverstellbar, an dem Förderkanal angeordnet, wozu insbesondere zumindest ein verstellbares Tragelement zur tragenden Halterung zumindest des Fangrohrstücks vorgesehen ist. Dadurch ist insbesondere eine flexible Anpassung möglich.

Die den Kanalboden bildende Gleitfläche ist insbesondere zur gleitenden Anlage einer Oberseite der Behälterverschlüsse ausgebildet. Alternativ oder additiv bilden die erste und zweite Führungsfläche jeweils einen Wandungsabschnitt des Förderkanals und sind zur gleitenden Anlage einer Seitenfläche der Behälterverschlüsse ausgebildet. Beispielsweise können die Gleitfläche und/oder die Führungsflächen zumindest abschnittsweise ein Material mit geringem Reibwiderstand bzw. mit geringem Reibungskoeffizienten bzw. ein Gleitmaterial umfassen oder aus einem solchen Material bestehen. Selbiges gilt analog auch für den ersten und den zweiten Führungsflächenabschnitt des Umlenkelements, die in der Grundstellung des Umlenkelements jeweils einen Teil der Führungsflächen bilden und die in der Ausleitstellung als Leitflächen dienen, zwischen denen die Behälterverschlüsse unter gleitender Anlage ihrer Seitenfläche geführt und geleitet in Auslassrichtung aus dem Förderkanal ausgeleitet werden.

Gemäß einer bevorzugten Ausführungsvariante kann das drehbewegliche Umlenkelement manuell betätigbar und mittels manuell ausgeführter Drehbewegung zwischen der Grundstellung und der Ausleitstellung bewegbar sein. In dieser bevorzugten Variante ist der konstruktive Aufbau insbesondere einfach und die Bedienung ist werkzeuglos möglich.

Ebenso bevorzugt kann das drehbewegliche Umlenkelement alternativ auch automatisiert betätigbar und mittels automatisiert ausgeübter Drehbewegung zwischen der Grundstellung und der Ausleitstellung bewegbar sein. Die Ausleiteinrichtung weist hierzu bevorzugt einen mit dem Umlenkelement zusammenwirkenden Antrieb, insbesondere einen Arbeitszylinder, auf. Dieser ist insbesondere dazu ausgebildet, die Drehbewegung zum Bewegen des Umlenkelementes auszuführen. Ganz besonders bevorzugt ist hierbei das drehbewegliche Umlenkelement gesteuert bewegbar, wobei der Antrieb, insbesondere der Arbeitszylinder, über eine bei der Vorrichtung vorgesehene Steuereinrichtung steuerbar ist und dazu mit der Steuereinrichtung in kommunizierender Verbindung steht.

Der Förderkanal kann als Förderrutsche ausgebildet sein, die die Behälterverschlüsse aufgrund der einwirkenden Schwerkraft fördert.

Vorteilhaft ist die Umlenkanordnung näherungsweise als Weichensystem eingerichtet, wobei insbesondere das Umlenkelement im Wesentlichen als Weichenelement ausgebildet ist. Das Umlenkelement kann daher auch als weichenartiges oder wechslerartiges Element verstanden werden und ist dazu ausgebildet, die Bewegungsrichtung des Behälterverschlussstroms zu ändern, wenn es von seiner Grundstellung in die Ausleitstellung gedreht wird.

Die vorliegende Erfindung betrifft auch eine Behälterbehandlungsanlage umfassend zumindest einen Verschließer zum Verschließen von Behältern mit Behälterverschlüssen sowie eine mit dem Verschließer verbundene Vorrichtung zum Fördern der Behälterverschlüsse zu dem Verschließer. Die Vorrichtung zum Fördern der Behälterverschlüsse ist hierbei so ausgebildet und eingerichtet, wie weiter oben im Zusammenhang mit der Vorrichtung beschrieben.

Die vorliegende Erfindung umfasst auch ein Verfahren zum Fördern von Behälterverschlüssen gemäß Anspruch 17.

Bevorzugt werden bei dem Verfahren die Behälterverschlüsse, insbesondere Kronenkorken in einer vorgegebenen Orientierung gefördert, und zwar insbesondere in einer Orientierung, in der die Behälterverschlüsse mit ihrer Oberseite gleitend an der Gleitfläche anliegen. Die besonderen Vorteile des Verfahrens, spiegeln sich durch die bereits weiter oben im Zusammenhang mit der Vorrichtung erläuterten Vorteile wieder.

Gemäß einer bevorzugten Ausführungsvariante werden die aus der Auslassöffnung austretenden Behälterverschlüsse mittels einer Auffangeinheit der Ausleiteinrichtung aufgefangen.

Bevorzugt werden die Behälterverschlüsse vor dem Drehen des Umlenkelements mittels einer bei der Vorrichtung vorgesehenen und in Förderrichtung vor dem Umlenkelement angeordneten Stoppvorrichtung gestoppt. Ganz besonders bevorzugt werden dabei nach dem Stoppen der Behälterverschlüsse und vor dem Drehen des Umlenkelements die im Förderkanal stromabwärts der Stoppvorrichtung anwesenden Behälterverschlüsse durch einen Leerlaufprozess aus dem Förderkanal gefördert. Ein derartiger Leerlaufprozess kann beispielsweise ein Leerlauf oder Trockenlauf eines der Vorrichtung nachgeschalteten Verschließers sein. Durch diese über den Leerlauf erfolgende Entleerung des Förderkanal-Abschnittes stromabwärts der Stoppvorrichtung wird sichergestellt, dass zum Drehen des Umlenkelementes bzw. während der Drehbewegung keine Behälterverschlüsse im Bereich des Umlenkelementes anwesend sind und dadurch ein störendes Verklemmen oder Blockieren verursachen könnten. Da die Anzahl der über Leerlauf herausgeförderten Behälterverschlüsse, welche nicht gesammelt und wiederverwertet werden können, jedoch sehr gering ist, können mit dem vorliegenden Verfahren trotz dieser Sicherheitsmaßnahmen kostensparend und ressourcenschonend nahezu alle im Förderkanal befindlichen Behälterverschlüsse aufgefangen und wiederverwendet werden.

Das Umlenkelement kann manuell oder automatisiert bewegt werden.

Die Erfindung wird im Folgenden anhand der Figuren an Ausführungsbeispielen näher erläutert. Es zeigen:
- Fig. 1: schematisch dargestellt in einer perspektivischen Ansicht eine Ausführungsvariante einer Vorrichtung zum Fördern von Behälterverschlüssen mit einem Umlenkelement in Grundstellung,
- Fig. 2: schematisch dargestellt in perspektivischer Ansicht die Ausführungsvariante der Vorrichtung der Figur 1 mit dem Umlenkelement in Ausleitstellung,
- Fig. 3: schematisch dargestellt in einer Vorderansicht eine alternative Ausführungsvariante einer Vorrichtung zum Fördern von Behälterverschlüssen mit dem Umlenkelement in Grundstellung,
- Fig. 4: schematisch dargestellt in Vorderansicht die Ausführungsvariante der Vorrichtung der Figur 3 mit dem Umlenkelement in Ausleitstellung,
- Fig. 5: schematisch dargestellt eine Ausführungsvariante eines Umlenkelements in einer perspektivischen Ansicht,
- Fig. 6a, 6b: grob schematisch skizziert jeweils eine rückseitige Ansicht einer Ausführungsvariante einer am Förderkanal befestigten Umlenkanordnung in verschiedenen Positionen und
- Fig. 7a, 7b: grob schematisch skizziert jeweils eine rückseitige Ansicht einer alternativen Ausführungsvariante einer am Förderkanal befestigten Umlenkanordnung in verschiedenen Positionen.

Die in den Figuren allgemein mit dem Bezugszeichen 1 bezeichnete Vorrichtung zum Fördern von Behälterverschlüssen 2 dient insbesondere der Führung und dem Transport von Behälterverschlüssen 2, insbesondere Schraubverschlüssen oder Kronenkorken für Getränkebehälter, und wird beispielsweise in Abfüllanlagen, wie z.B. Getränkeabfüllanlagen zur Zuführung der Behälterverschlüsse 2 an eine nicht näher spezifizierte und nicht dargestellte Verschließmaschine eingesetzt. Die Vorrichtung 1 steht hierbei mit der Verschließmaschine bzw. dem Verschließer in Verbindung und kann somit auch als Teil einer komplexen Anlage, insbesondere Behälterbehandlungsanlage, z.B. Abfüllanlage verstanden werden.

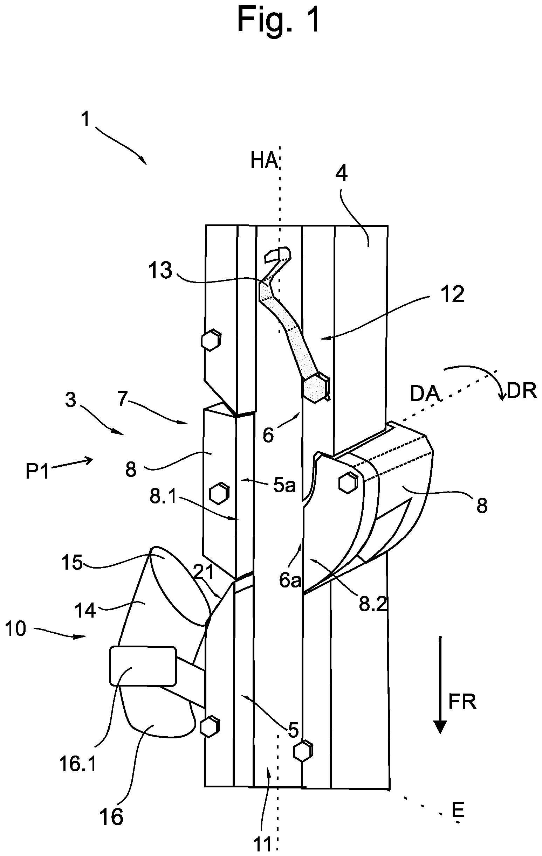

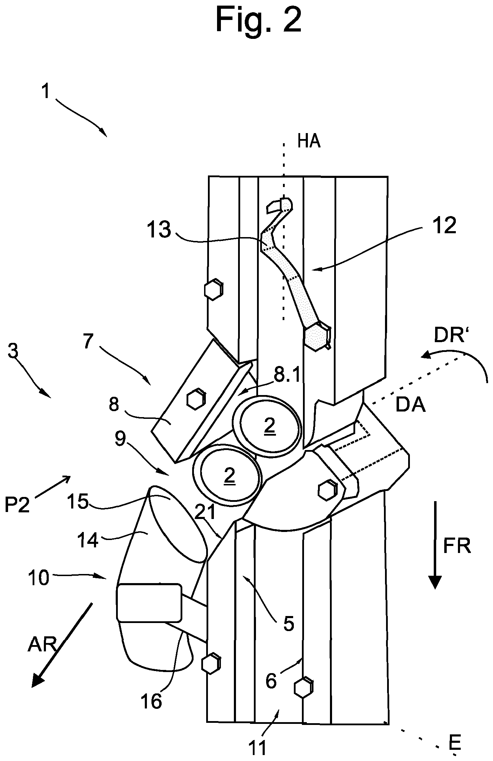

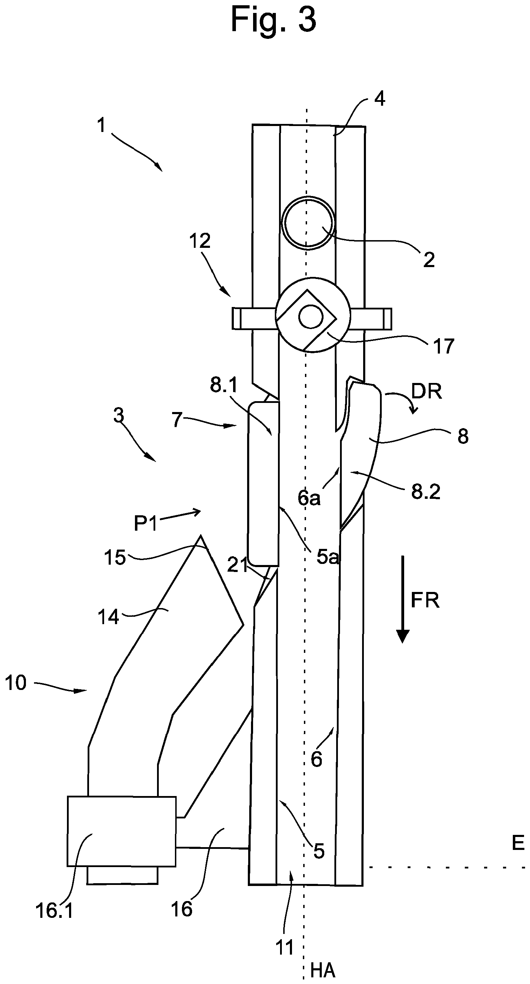

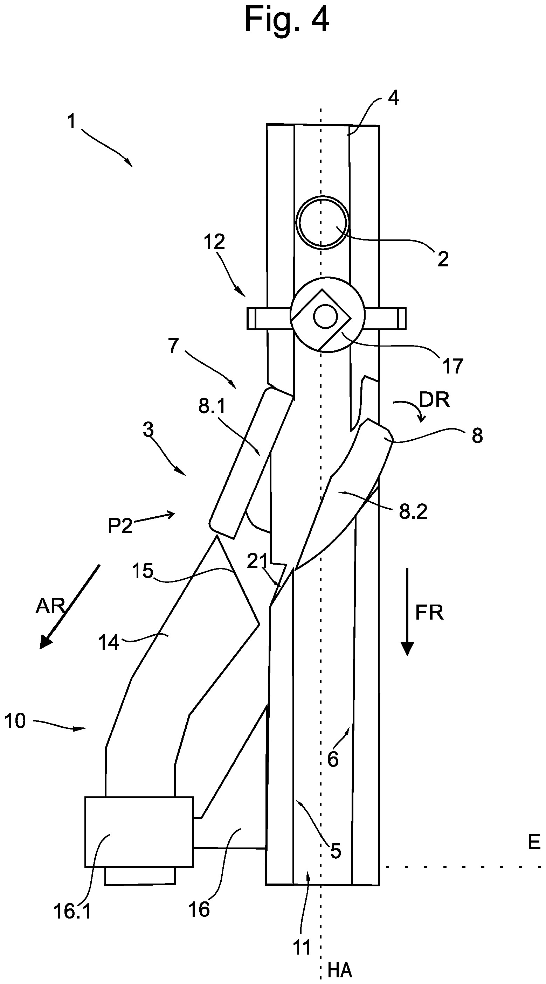

Die Figuren 1 und 2 zeigen anhand einer jeweiligen schematischen Darstellung eine perspektivische Ansicht eines Abschnitts einer beispielhaften Ausführungsvariante der Vorrichtung 1 zum Fördern von Behälterverschlüssen 2 in verschiedenen Betriebs- oder Arbeitszuständen bzw. -positionen. In den Figuren 3 und 4 ist eine beispielhafte, alternative Ausführungsvariante der Vorrichtung 1 abschnittsweise in einer Vorderansicht dargestellt.

Bei den Beispielen der Figuren weist die Vorrichtung 1 jeweils einen sich entlang einer Hauptachse HA erstreckenden und zur führenden und gleitenden Aufnahme einer Vielzahl von Behälterverschlüssen 2 ausgebildeten Förderkanal 4 auf, der einen Aufnahmeraum für die Aufnahme der Behälterverschlüsse 2 bildet, dessen im Wesentlichen rechteckförmiger Querschnitt an die Form und Dimension der zu transportierenden bzw. zu führenden und zu fördernden Behälterverschlüsse 2 angepasst ist. Zur führenden und gleitenden Aufnahme der Behälterverschlüsse 2 umfasst der Förderkanal 4 zumindest eine einen Kanalboden bildende Gleitfläche 11, auf der insbesondere eine Oberseite der Behälterverschlüsse 2 bzw. eine obere Außenfläche der Behälterverschlüsse 2 in gleitende Anlage gelangt, sowie wenigstens eine erste und eine zweite Führungsfläche 5, 6, die gegenüberliegend seitlich entlang des Kanalbodens angeordnet sind und sich im Wesentlichen entlang der Hauptachse HA erstrecken.

Die erste und die zweite Führungsfläche 5, 6 definieren dabei jeweils einen seitlichen Wandungsabschnitt bzw. eine Seitenwandung des Förderkanals 4 und sind zur gleitenden und führenden Anlage einer Seitenfläche der Behälterverschlüsse 2 ausgebildet. Jede Führungsfläche 5, 6 umfasst dabei mehrere Abschnitte bzw. Teile oder Teilflächen und ist daher jeweils als mehrteilige, zusammengesetzte Fläche zu verstehen.

Beispielsweise sind seitlich am Kanalboden an jeder Längsseite fluchtend zueinander ausgerichtete, leistenförmige, sich parallel zur Hauptachse HA erstreckende Einzelbauteile angeordnet, die sich an jeder Längsseite des Förderkanals 4 zu einer Seitenwandung des Förderkanals 4 zusammensetzen. Die Seitenwandungen des Förderkanals 4 sind bezogen auf die Hauptachse HA sich gegenüberliegend angeordnet, so dass die leistenförmigen Bauteile mit ihren einander zugewandten Seiten bzw. Oberflächen die jeweiligen die Führungsflächen 5, 6 bereitstellen.

Im Förderkanal 4 in korrekter Orientierung aufgenommene Behälterverschlüsse 2 liegen mit ihren Oberseiten gleitend an der den Kanalboden bildenden Gleitfläche 11 an, gelangen dabei mit Abschnitten ihrer Seitenfläche in Anlage an die seitlichen Führungsflächen 5, 6 des Förderkanals 4 und werden im Normalbetrieb in einer entlang der Hauptachse HA orientierten Förderrichtung FR gefördert, und zwar insbesondere von einer Einlaufseite des Förderkanals 4 bis zu dessen Auslaufseite. Der Förderkanal 4 weist beispielsweise eine solche Gesamtlänge auf, dass in etwa mindestens 150 bis 160 Stück Behälterverschlüsse 2 in Reihe hintereinander, insbesondere Behälterverschluss 2 an Behälterverschluss 2, d.h. mit gegenseitigem Kontakt, zwischen Einlaufseite und Auslaufseite aufgenommen sind.

Zum Zwecke einer Entleerung des Förderkanals 4, beispielsweise wegen einer geplanten Reinigung der Anlage oder des Förderkanals 4 und/oder wegen eines geplanten Wechsels der Verschlussart oder -sorte, umfasst die Vorrichtung 1 eine Ausleiteinrichtung 3 zum Ausleiten der Behälterverschlüsse 2 aus dem Förderkanal 4.

Die Ausleiteinrichtung 3 weist hierbei zumindest eine Umlenkanordnung 7 mit wenigstens einem drehbeweglichen Umlenkelement 8 auf, wobei das Umlenkelement 8 von wenigstens einer in den jeweiligen Figuren 1 und 3 dargestellten Grundstellung P1 in zumindest eine in den jeweiligen Figuren 2 und 4 dargestellte Ausleitstellung P2 bewegbar ist, und zwar mittels einer in Drehrichtung DR erfolgenden Drehbewegung um eine Drehachse DA. Die Drehachse DA des drehbeweglichen Umlenkelements 8 verläuft hierbei im Wesentlichen senkrecht zur Gleitfläche 11 des Förderkanals 4, nämlich senkrecht zu einer Ebene E, in der die Gleitfläche 11 des Förderkanals 4 zu liegen kommt. Die in den Figuren nur grob schematisch angedeutete Ebene E tritt somit in der perspektivischen Darstellung der Figuren 1 und 2 schräg aus der Papierebene heraus und verläuft in den Ansichten der Darstellungen gemäß Figuren 3 und 4 parallel zur Papierebene.

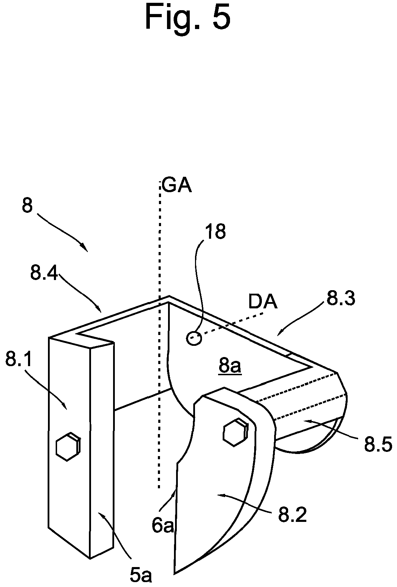

Das Umlenkelement 8 der Umlenkanordnung 7 weist eine erste und eine zweite Wandung 8.1, 8.2 auf, womit das Umlenkelement 8 in seiner Grundstellung P1 (Figuren 1 und 3) einen jeweiligen Führungsflächenabschnitt 5a, 6a als Teil der ersten und zweiten Führungsfläche 5, 6 bildet und somit in dieser Grundstellung P1 ebenfalls einen Abschnitt bzw. Bereich der Wandung, insbesondere einen Wandungsabschnitt des Förderkanals 4, definiert. Das Umlenkelement 8 wird mit Bezug auf die Figur 5 untenstehend mehr im Detail beschrieben.

Durch die drehbare Befestigung des drehbeweglichen Umlenkelements 8 kann dieses mittels der Drehbewegung in Drehrichtung DR von der Grundstellung P1 in die Ausleitstellung P2 bewegt werden. Es versteht sich, dass das Umlenkelement 8 *vice versa* mittels einer Drehbewegung in einer der Drehrichtung DR gegenläufigen Drehrichtung DR' (siehe Figur 2) wieder von der Ausleitstellung P2 zurück in die Grundstellung P1 gebracht werden kann.

In der Ausleitstellung P2 (Figuren 2 bzw. 4) welche auch als Öffnungsstellung, Auslassstellung oder Freigabestellung bzw. als geöffnete Position bezeichnet werden kann, gibt das Umlenkelement 8 eine seitlich am Förderkanal 4 angeordnete Auslassöffnung 9 für die Behälterverschlüsse 2 frei und öffnet somit den Förderkanal 4 seitlich. Aufgrund der Drehbewegung des Umlenkelements 8 in Drehrichtung DR werden die Führungsflächenabschnitte 5a, 6a des Umlenkelements 8 relativ zur Hauptachse HA ausgelenkt und dadurch gegenüber der Hauptachse HA des Förderkanals 4 schräg angestellt.

Die Drehbewegung zum Drehen des drehbeweglichen Umlenkelements 8 von der Grundstellung P1 in die Ausleitstellung P2 erfolgt dabei über einen vorgegebenen Winkelabstand, der vorzugsweise kleiner 90° ist. Die Drehung ist daher insbesondere kleiner als eine Vierteldrehung. In den dargestellten Beispielen erfolgt die Drehung vorzugsweise über einen Winkelabstand von etwa 30° bis 35°. Nach einer solchen Drehung des Umlenkelements 8, das heißt, wenn dieses die Ausleitstellung P2 einnimmt, quert insbesondere die zweite Wandung 8.2 des drehbeweglichen Umlenkelements 8 den Förderkanal 4 und bildet dadurch eine Anschlag- oder Anlauffläche bzw. eine Leitfläche, wobei die Leitfläche einen Weitertransport in Förderrichtung FR sperrt und dabei die Behälterverschlüsse 2 aus der Förderrichtung FR in eine Auslassrichtung AR umleitet.

In anderen Worten ausgedrückt, sind die Führungsflächenabschnitte 5a, 6a in der Ausleitstellung P2 relativ zur Hauptachse HA verschwenkt und dienen in dieser schräg zur Hauptachse HA verlaufenden Orientierung als Leitflächen zum Ausleiten der Behälterverschlüsse 2.

In der Ausleitstellung P2 wird der Strom bzw. Fluss der Behälterverschlüsse 2 aus der Förderrichtung FR abgelenkt bzw. umgelenkt in die Auslassrichtung AR, wobei die Behälterverschlüsse 2 bis zur Auslassöffnung 9 geführt sind, insbesondere zwangsgeführt, so lange bis sie die Auslassöffnung 9 erreichen, wobei die Behälterverschlüsse 2 vorzugsweise geführt bis hin zur Auslassöffnung 9 als einreihiger Behälterverschlussstrom gefördert werden. Die Führung der Behälterverschlüsse 2 erfolgt dabei weiterhin insbesondere über die durch die erste und zweite Wandung 8.1, 8.2 des Umlenkelements 8 gebildeten Führungsflächenabschnitte 5a, 6a, welche in der Ausleitstellung P2 des Umlenkelements 8, wie weiter oben bereits erwähnt, als Leitflächen zum Ausleiten der Behälterverschlüsse 2 "umfunktioniert" sind und an welchen die Behälterverschlüsse 2 mit Abschnitten ihrer Seitenflächen anliegen.

In den dargestellten Beispielen ist in der Seitenwandung des Förderkanals 4 eine Schrägfläche 21 zur weiteren unterstützenden Führung der in Auslassrichtung AR transportierten Behälterverschlüsse 2 vorgesehen, die die Behälterverschlüsse 2 bis hin zur Auslassöffnung 9 führt bzw. leitet. Die Schrägfläche 21 verlängert somit quasi in den dargestellten Beispielen näherungsweise die durch die zweite Wandung 8.2 des in Ausleitstellung P2 befindlichen Umlenkelements 8 gebildete Leitfläche. Dabei kann die Schrägfläche 21 mit der durch die zweite Wandung 8.2 des Umlenkelements 8 gebildeten Leitfläche in einer gemeinsamen Ebene verlaufen. Alternativ kann jedoch die Schrägfläche 21 im Winkel zu der Leitfläche ausgerichtet sein und dadurch beispielsweise zusätzlich noch eine Lenk- oder Bremsfunktion erfüllen.

Die über die Auslassöffnung 9 seitlich aus dem Förderkanal 4 austretenden bzw. herausfallenden Behälterverschlüsse 2 werden für eine mögliche Wiederverwendung aufgefangen, wozu die Ausleiteinrichtung 3 ferner eine Auffangeinheit 10 zum Auffangen von aus der Auslassöffnung 9 austretenden Behälterverschlüssen 2 aufweist. In den dargestellten Beispielen umfasst die Auffangeinheit 10 zumindest ein Fangrohrstück 14 mit einer Auffangmündung 15, wobei das Fangrohrstück 14 relativ zum Förderkanal 4 so angeordnet und ausgerichtet ist, dass die Auffangmündung 15 des Fangrohrstücks 14 der in Ausleitstellung P2 des Umlenkelementes 8 gebildeten Auslassöffnung 9 derart zugewandt ist, dass die herausfallenden Behälterverschlüsse 2 von der Auffangmündung 15 aufgenommen und in das Fangrohrstück 14 eingeleitet werden.

Die Auffangeinheit 10 ist verstellbar, insbesondere höhen- und/oder winkelverstellbar, an dem Förderkanal 4 angeordnet und dazu über ein verstellbares Tragelement 16 an dem Förderkanal 4 befestigt. Das verstellbare Tragelement 16 ist zumindest zur tragenden Halterung des Fangrohrstücks 14 vorgesehen und kann beispielsweise Klemmbacken 16.1 aufweisen, über die ein Einstellen des Fangrohrstücks 14 in der Höhe und im Winkel möglich ist. In den Figuren zwar nicht dargestellt können ein flexibler Schlauch oder ein weiteres Rohr am Fangrohrstück 14, insbesondere an dem der Auffangmündung 15 abgewandten Ende des Fangrohrstücks 14, befestigt werden. Damit können die aufgefangenen Behälterverschlüsse 2 zur ihrer Wiederverwendung gesammelt und entsprechend in einen nicht dargestellten Sammel- oder Vorratsbehälter eingebracht werden.

Bei den beschriebenen, beispielhaften Ausführungsvarianten der Vorrichtung 1 ist an dem Förderkanal 4 ferner jeweils zumindest eine in Förderrichtung FR vor dem drehbeweglichen Umlenkelement 8 - in den Darstellungen der Figuren 1 bis 4 somit oberhalb des Umlenkelements 8 - angeordnete Stoppvorrichtung 12 zum Stoppen der Behälterverschlüsse 2 vorgesehen.

Die Stoppvorrichtung 12 ist hierbei in der beispielhaften Vorrichtung 1 gemäß Figuren 1 und 2, bei der die Umlenkanordnung 7 insbesondere für eine manuelle Betätigung, nämlich für ein manuelles Drehen des Umlenkelements 8 eingerichtet ist, als ein schwenkbeweglich am Förderkanal 4 befestigtes federartiges Klemmelement 13 ausgebildet. Das Klemmelement 13, welches um eine Schwenkachse verschwenkbar ist, die im Wesentlichen senkrecht zu der die Gleitfläche 11 des Förderkanals 4 aufnehmenden Ebene E verläuft, weist eine Federkraft oder Klemmkraft auf, mit der ein freies Halteende des federartigen Klemmelements 13 in Richtung der den Kanalboden bildenden Gleitfläche 11 gedrückt wird. Bei einer Auslenkung bzw. bei Verschwenken des Klemmelementes 13, derart, dass das freie Halteende in den Bereich des Aufnahmeraumes eingeschwenkt wird, greift das Halteende der Federkraft folgend in den Aufnahmeraum des Förderkanals 4 ein und hält dadurch die stromaufwärts befindlichen Behälterverschlüsse 2 in ihrer Bewegung in Förderrichtung FR an bzw. stoppt oder blockiert den Behälterverschlussstrom an der Stelle des Eingriffs.

Bei der alternativen, beispielhaften Vorrichtung 1 gemäß Figuren 3 und 4, bei der die Umlenkanordnung 7 insbesondere für eine automatisierte Betätigung, nämlich für ein automatisiertes Drehen des Umlenkelements 8 eingerichtet ist, ist die Stoppvorrichtung 12 durch einen Verschlussstopper 17 gebildet, der zumindest ein linear antreibbares Stoppelement (in den Figuren nicht sichtbar) umfasst. Das Stoppelement ist beispielsweise als ein eine Längsachse aufweisendes, längliches, stab- oder stiftförmiges bzw. bolzenartiges Element ausgebildet und axial verschiebbar in einem Gehäuse des Verschlussstoppers 17 aufgenommen. Dabei ist das Stoppelement seiner Länge nach senkrecht zu der die Gleitfläche 11 aufnehmenden Ebene E orientiert und in axialer Richtung, nämlich in Richtung zu der Gleitfläche 11 hin ausfahrbar. Das Stoppelement kann zum Beispiel mittels Spindelantrieb angetrieben und verstellt werden und dadurch in einer Richtung senkrecht zu der die Gleitfläche 11 aufnehmenden Ebene E so in den Aufnahmeraum des Förderkanals 4 hineinbewegt werden, dass die stromaufwärts befindlichen Behälterverschlüsse 2 gestoppt oder blockiert bzw. in ihrer Bewegung in Förderrichtung FR angehalten werden.

Mit der vorliegenden Vorrichtung 1 wird im Zuge einer geplanten Reinigung oder eines geplanten Wechsels der Behälterverschlüsse 2 zur Entleerung des Förderkanals 4 zunächst die Stoppvorrichtung 12 betätigt, um den Strom bzw. Fluss der Behälterverschlüsse 2 anzuhalten und damit alle Behälterverschlüsse 2 stromaufwärts der Stoppvorrichtung 12 zu stoppen und gleichzeitig zum Verharren in dieser Stopp- oder Wartehaltung bzw. Haltestellung zu zwingen. Im Anschluss daran werden alle Behälterverschlüsse 2 stromabwärts der Stoppvorrichtung 12 durch einen Leerlauf bzw. Trockenlauf des Verschließers der Behälterbehandlungsanlage aus dem Förderkanal 4 herausgefahren. Während dieses Leerlaufs befindet sich das Umlenkelement 8 in der Grundstellung P1. Nach dem Leerlauf wird das Umlenkelement 8 über die Drehbewegung in Drehrichtung DR in die Ausleistellung P2 gebracht und die erzwungene Stopp- oder Wartehaltung der Behälterverschlüsse 2 wird durch Zurückstellen der Stoppvorrichtung 12 aufgehoben bzw. gelöst, wodurch sich alle stromaufwärts der Stoppvorrichtung 12 befindlichen Behälterverschlüsse 2 wieder in Bewegung setzen und sich zunächst in Förderrichtung FR bis zu dem Umlenkelement 8 bewegen und - umgelenkt von dem in Ausleitstellung P2 befindlichen Umlenkelement 8 - in Auslassrichtung AR über die Auslassöffnung 9 aus dem Förderkanal 4 ausgeschleust werden. Schließlich werden die aus der Auslassöffnung 9 herausfallenden Behälterverschlüsse 2 von der Auffangeinheit 10 aufgefangen und können in einem Behältnis gesammelt und danach wiederverwendet werden.

Insbesondere müssen daher mit der vorliegenden Vorrichtung bei einer Entleerung des Förderkanals 4 schließlich nur diejenigen Behälterverschlüsse 2, die sich in Förderrichtung FR nach der Stoppvorrichtung 12 befinden, über einen Leerlauf des Förderkanals 4 bzw. des Verschließers herausgefahren werden, so dass mit der vorliegenden Vorrichtung 1 nahezu alle Behälterverschlüsse 2 gesammelt und danach wiederverwendet werden können.

Die Figur 5 zeigt grob schematisch dargestellt in einer perspektivischen Ansicht ein Ausführungsbeispiel eines Umlenkelementes 8 für den Einsatz in einer Ausleiteinrichtung 3 der vorliegenden Vorrichtung 1. Das Umlenkelement 8 umfasst zumindest einen eine Grundkörperachse GA aufweisenden Grundkörper mit im Wesentlichen vier jeweils im Winkel aneinander anschließenden Seiten, von denen eine Vorderseite im Wesentlichen offen ausgebildet und durch die beabstandet zueinander angeordneten Wandungen 8.1, 8.2 des Umlenkelements 8 definiert ist.

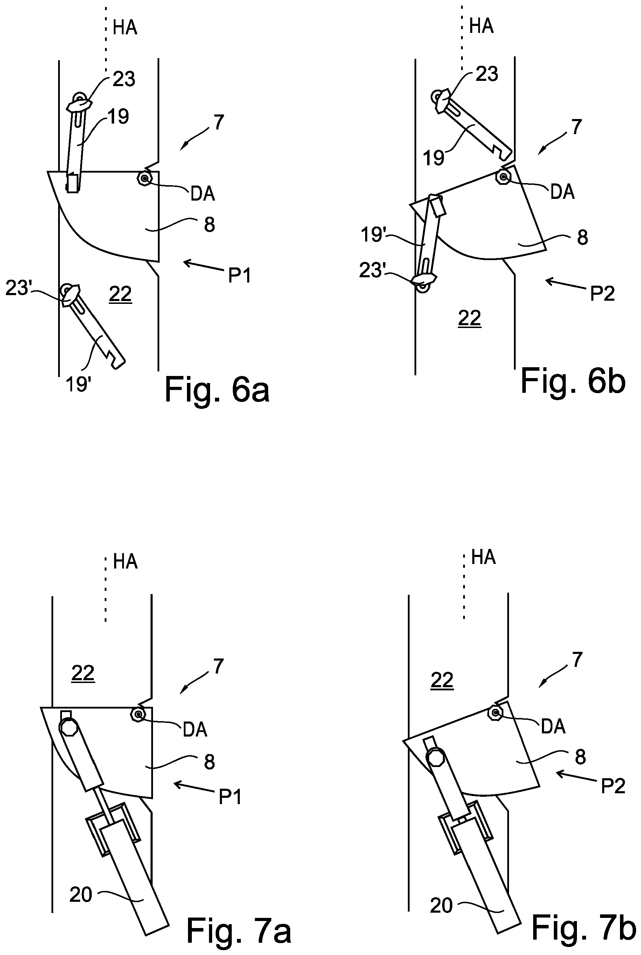

Der Vorderseite gegenüberliegend angeordnet weist der Grundkörper eine Rückseite 8.3 auf, welche eine Rückwand bildet, deren Innenfläche 8a im montierten Zustand, nämlich wenn das Umlenkelement 8 drehbeweglich am Förderkanal 4 befestigt ist, einer dem Aufnahmeraum zur Aufnahme der Behälterverschlüsse 2 abgewandten rückseitigen Oberfläche 22 (siehe Figuren 6a, 6b und 7a, 7b) des den Kanalboden bildenden Bauteils zugewandt ist, insbesondere abschnittsweise dagegen anliegt. Über die Rückseite 8.3 ist das Umlenkelement 8 drehbeweglich am Förderkanal 4 festgelegt, wozu in dem Beispiel der Figur 5 eine Bohrung 18 zur Durchführung bzw. teilweisen Aufnahme eines Befestigungsbolzens eingebracht ist. Sich gegenüberliegend angeordnete erste und zweite Seiten 8.4, 8.5 des Grundkörpers verbinden jeweils die die Vorderseite definierenden Wandungen 8.1, 8.2 mit der Rückseite 8.3. Im montierten Zustand des Umlenkelements 8 umgibt bzw. umgreift dieses zumindest abschnittsweise das den Kanalboden bildende Bauteil des Förderkanals 4, wobei die Grundkörperachse GA vorzugsweise mit der Hauptachse HA des Förderkanals 4 zusammenfällt, sofern sich das Umlenkelement 8 in der Grundstellung P1 befindet.

Die Formgebung und Dimensionierung des Grundkörpers des Umlenkelements 8 ist auf die Form und Größe des Förderkanals 4 abgestimmt, wobei insbesondere darauf zu achten ist, dass die erste und zweite Wandung 8.1, 8.2 in ihrer Form und Größe so ausgebildet sind, dass sie ausreichend weit über die Gleitfläche 11 vorstehen und nur in dem Maße in den Aufnahmeraum hineinragen, dass die durch die erste und zweite Wandung 8.1, 8.2 gebildeten Führungsflächenabschnitte 5a, 6a in der Grundstellung P1 des Umlenkelements 8 vorzugsweise in einer jeweiligen Ebene der ersten und zweiten Führungsfläche 5, 6 verlaufen und insbesondere bündig in der ersten und zweiten Führungsfläche 5, 6 integriert sind. Ferner ist bezüglich Formgebung und Dimensionierung darauf zu achten, dass das Umlenkelement 8 klemmungsfrei und hinderungsfrei um die Drehachse DA in Drehrichtung DR verdreht werden kann, und zwar wenigstens über den für die Drehung vorgesehenen Winkelabstand.

Das Umlenkelement 8 ist vorzugsweise zumindest im Bereich der die Führungsflächenabschnitte 5a, 6a bildenden ersten und zweiten Wandung 8.1, 8.2 aus einem beständigen, jedoch reibungsarmen Material hergestellt, welches ein erleichtertes Gleiten der Behälterverschlüsse 2 erlaubt. Es versteht sich, dass das Material zur Herstellung ein im Bereich der Lebensmittel- bzw. Getränkeindustrie verwendbares Material ist, das die erforderlichen Reinigungs- und Hygienestandards erfüllt, sowie eine ausreichende Beständigkeit gegenüber Reinigungs- und Desinfektionsmittel aufweist.

Zur besseren Veranschaulichung der drehbeweglichen Befestigung sowie der Drehung des Umlenkelementes 8 sind in den Figuren 6a, 6b und 7a, 7b jeweils rückseitige Ansichten verschiedener Ausführungsvarianten von am Förderkanal 4 befestigten Umlenkanordnungen 7 dargestellt, und zwar jeweils in verschiedenen Betriebsstellungen. In der dargestellten rückseitigen Ansicht ist der Förderkanal 4 nur mit dessen den Kanalboden bildenden Bauteil in Draufsicht auf die rückseitige Oberfläche 22 zu sehen und das Umlenkelement 8 ist entsprechend ebenfalls nur in Draufsicht auf seine der Innenfläche 8a gegenüberliegende Außenfläche der Rückseite 8.3 zu sehen.

Bei der Variante der Figuren 6a, 6b ist die Umlenkanordnung 7 für eine manuelle Betätigung des Umlenkelements 8 eingerichtet und bei der Variante der der Figuren 7a, 7b ist die Umlenkanordnung 7 für eine automatisierte Betätigung des Umlenkelements 8 eingerichtet.

In der Ausführungsvariante für die manuelle Betätigung des Umlenkelements 8 (Fig. 6a, 6b) sind beispielsweise zwei Feststell- oder Arretiermittel 19, 19' vorgesehen, die schwenkbeweglich an der rückseitigen Oberfläche 22 des Kanalbodens des Förderkanals 4 befestigt sind und über die das Umlenkelement 8 in der jeweiligen Grundstellung P1 bzw. Ausleitstellung P2 arretiert oder gesichert werden kann. Im dargestellten Beispiel sind die Feststell- oder Arretiermittel 19, 19' durch entsprechend schwenkbeweglich an der rückseitigen Oberfläche 22 angeordnete Haken ausgebildet, die in eine korrespondierende Hakenaufnahme außen an der Rückseite des Umlenkelements 8 eingreifen können. Die Haken 19, 19' sind beispielsweise über Sicherungsmittel 23, 23' feststellbar, welche im dargestellten Beispiel in Form von Flügelschrauben ausgebildet sind. In der in Figur 6a dargestellten Grundstellung P1 greift der (in der Darstellung der Figur oberhalb des Umlenkelements 8 angeordnete) erste Haken 19 in die Hakenaufnahme ein um diese Position zu sichern. Um ausgehend von der Grundstellung P1 das Umlenkelement 8 um die Drehachse DA zu drehen, wird zunächst die erste Flügelschraube 23 gelöst und der erste Haken 19 zur Seite geschwenkt. Das Umlenkelement 8 kann nun in die Ausleitstellung P2 gedreht werden, wobei die Ausleitstellung P2 wiederum gesichert wird durch entsprechendes Verschwenken des zweiten Hakens 19', bis dieser in die Hakenaufnahme eingreift, wobei der zweite Haken 19' in dieser Eingriffsposition durch Festdrehen der zweiten Flügelschraube 23' fixiert wird. Anstelle der beiden Haken 19, 19' kann beispielweise ein einzelnes Blech mit Langloch als Feststell- oder Arretiermittel verwendet werden, vorzugsweise in Kombination mit einer Flügelschraube als Sicherungsmittel.

Mittels der in den Figuren 6a, 6b beispielshaft dargestellten Umlenkanordnung 7 in Kombination mit der in den Figuren 1 und 2 dargestellten Stoppvorrichtung 12 mit dem manuell betätigbaren Klemmelement 13, kann beispielsweise das Ausleiten der Behälterverschlüsse 2 zum Entleeren des Förderkanals 4 vollständig manuell durchgeführt werden.

In der alternativen Ausführungsvariante für die automatisierte Betätigung des Umlenkelements 8 (Fig. 7a, 7b) ist beispielsweise ein Arbeitszylinder 20 vorgesehen, an der rückseitigen Oberfläche 22 des Kanalbodens des Förderkanals 4 angeordnet ist und der an einem Anlenkstutzen außen an der Rückseite des Umlenkelements 8 angreift und zum automatisierten Verdrehen des Umlenkelementes 8 mit diesem zusammenwirkt. In der Grundstellung P1 des Umlenkelements 8 ist der Arbeitszylinder 20 ausgefahren und kann das Umlenkelement 8 in seiner Grundstellung P1 festhalten, insbesondere sichern bzw. arretieren. Zum Verdrehen des Umlenkelements 8 aus der Grundstellung P1 in die Ausleitstellung P2 wird der Arbeitszylinder 20 eingefahren, welcher im eingefahrenen Zustand zugleich wiederum das Umlenkelement 8 in seiner Ausleitstellung P2 festhalten, insbesondere sichern bzw. arretieren kann.

Insbesondere erfolgt die automatisierte Betätigung des Umlenkelements 8 gesteuert, wobei die Ausleiteinrichtung 3, insbesondere der Arbeitszylinder 20, hierzu über eine bei der Vorrichtung 1 vorgesehene, jedoch nicht in den Figuren gezeigte, Steuereinrichtung steuerbar ist und mit der Steuereinrichtung in kommunizierender Verbindung steht.

Mittels der in den Figuren 7a, 7b beispielhaft dargestellten Umlenkanordnung 7 in Kombination mit der in den Figuren 3 und 4 dargestellten Stoppvorrichtung 12 mit dem automatisiert betätigbaren Verschlussstopper 17, kann beispielsweise das Ausleiten der Behälterverschlüsse 2 zum Entleeren des Förderkanals 4 vollständig automatisiert durchgeführt werden.

### Bezugszeichenliste

- 1: Vorrichtung zum Fördern von Behälterverschlüssen
- 2: Behälterverschluss
- 3: Ausleiteinrichtung
- 4: Förderkanal
- 5: erste Führungsfläche
- 5a: erster Führungsflächenabschnitt
- 6: zweite Führungsfläche
- 6a: zweiter Führungsflächenabschnitt
- 7: Umlenkanordnung
- 8: Umlenkelement
- 8.1: erste Wandung
- 8.2: zweite Wandung
- 8.3: Rückseite
- 8.4: erste Seite
- 8.5: zweite Seite
- 8a: Innenfläche
- 9: Auslassöffnung
- 10: Auffangeinheit
- 11: Gleitfläche
- 12: Stoppvorrichtung
- 13: Klemmelement
- 14: Fangrohrstück
- 15: Auffangmündung
- 16: Tragelement
- 16.1: Klemmbacken
- 17: Verschlussstopper
- 18: Bohrung
- 19, 19': Feststell- oder Arretiermittel
- 20: Arbeitszylinder
- 21: Schrägfläche
- 22: rückseitige Oberfläche
- 23, 23': Sicherungsmittel

- AR: Auslassrichtung
- DA: Drehachse
- DR, DR': Drehrichtung
- E: Ebene
- FR: Förderrichtung
- GA: Grundkörperachse
- HA: Hauptachse
- P1: Grundstellung
- P2: Ausleitstellung

## Patentansprüche

1. Vorrichtung (1) zum Fördern von Behälterverschlüssen (2) umfassend einen sich entlang einer Hauptachse (HA) erstreckenden Förderkanal (4) mit zumindest einer einen Kanalboden bildenden Gleitfläche (11) und mit wenigstens einer ersten und einer zweiten Führungsfläche (5, 6), wobei die Führungsflächen (5, 6) zum Führen der in einer Förderrichtung (FR) geförderten Behälterverschlüsse (2) gegenüberliegend seitlich entlang des Kanalbodens angeordnet sind,
wobei die Vorrichtung (1) eine Ausleiteinrichtung (3) zum Ausleiten der Behälterverschlüsse (2) aus dem Förderkanal (4) umfasst,
wobei die Ausleiteinrichtung (3) zumindest eine Umlenkanordnung (7) mit wenigstens einem drehbeweglichen Umlenkelement (8) aufweist, wobei das Umlenkelement (8) mittels Drehbewegung um eine Drehachse (DA) von wenigstens einer Grundstellung (P1) in zumindest eine Ausleitstellung (P2) bewegbar ist, wobei das Umlenkelement (8) eine erste und eine zweite Wandung (8.1, 8.2) aufweist, die in der Grundstellung (P1) des Umlenkelements (8) einen jeweiligen ersten und zweiten Führungsflächenabschnitt (5a, 6a) als Teil der ersten und der zweiten Führungsfläche (5, 6) des Förderkanals (4) bilden und wobei das Umlenkelement (8) in der Ausleitstellung (P2) eine Auslassöffnung (9) am Förderkanal (4) freigibt, **dadurch gekennzeichnet, dass** das Umlenkelement (8) zumindest einen eine Grundkörperachse (GA) aufweisenden Grundkörper umfasst, wobei der Grundkörper dazu ausgebildet ist, zumindest ein den Kanalboden bildendes Bauteil des Förderkanals (4) wenigstens abschnittsweise zu umgreifen und wobei der Grundkörper dazu innenseitig einen freien Raum zur wenigstens teilweisen Aufnahme des den Kanalboden bildenden Bauteils des Förderkanals (4) aufweist.

2. Vorrichtung (1) nach Anspruch 1, **dadurch gekennzeichnet, dass** die Drehachse (DA) des drehbeweglichen Umlenkelements (8) im Wesentlichen senkrecht zu der Gleitfläche (11) des Förderkanals (4) verläuft.

3. Vorrichtung (1) nach Anspruch 1 oder 2, **dadurch gekennzeichnet, dass** das drehbewegliche Umlenkelement (8) zur Ausführung der Drehung von der Grundstellung (P1) in die Ausleitstellung (P2) mit einer Drehbewegung in einer vorgegebenen Drehrichtung (DR) und über einen vorgegebenen Winkelabstand, insbesondere über einen Winkelabstand kleiner als 90°, drehbar ist.

4. Vorrichtung (1) nach einem der vorhergehenden Ansprüche, **dadurch gekennzeichnet, dass** die zweite Wandung (8.2) des drehbeweglichen Umlenkelements (8) in der Ausleitstellung (P2) den Förderkanal (4) quert und dadurch wenigstens der zweite Führungsflächenabschnitt (6a) des Umlenkelements (8) eine Leitfläche bildet, wobei die Leitfläche die Behälterverschlüsse (2) aus der Förderrichtung (FR) in eine Auslassrichtung (AR) umleitet und dabei einen Weitertransport in Förderrichtung (FR) sperrt.

5. Vorrichtung (1) nach einem der vorhergehenden Ansprüche, **dadurch gekennzeichnet, dass** an dem Förderkanal (4) ferner zumindest eine in Förderrichtung (FR) vor dem drehbeweglichen Umlenkelement (8) angeordnete Stoppvorrichtung (12) zum Stoppen der Behälterverschlüsse (2) vorgesehen ist.

6. Vorrichtung (1) nach Anspruch 5, **dadurch gekennzeichnet, dass** die Stoppvorrichtung (12) als ein schwenkbeweglich am Förderkanal (4) befestigtes federartiges Klemmelement (13) ausgebildet ist oder dass die Stoppvorrichtung (12) durch einen Verschlussstopper (17) gebildet ist, der zumindest ein linear antreibbares Stoppelement umfasst.

7. Vorrichtung (1) nach einem der vorhergehenden Ansprüche, **dadurch gekennzeichnet, dass** die Umlenkanordnung (7) zumindest ein Feststell- oder Arretiermittel (19) zum Feststellen des Umlenkelements (8) in wenigstens der Grundstellung (P1) und/oder der Ausleitstellung (P2) umfasst.

8. Vorrichtung (1) nach einem der vorhergehenden Ansprüche, **dadurch gekennzeichnet, dass** die Ausleiteinrichtung (3) ferner eine Auffangeinheit (10) zum Auffangen von aus der Auslassöffnung (9) austretenden Behälterverschlüssen (2) aufweist.

9. Vorrichtung (1) nach Anspruch 8, **dadurch gekennzeichnet, dass** die Auffangeinheit (10) zumindest ein Fangrohrstück (14) mit einer Auffangmündung (15) aufweist, wobei das Fangrohrstück (14) relativ zum Förderkanal (4) so angeordnet und ausgerichtet ist, dass die Auffangmündung (15) des Fangrohrstücks (14) der durch das in Ausleitstellung (P2) befindliche Umlenkelement (8) gebildeten Auslassöffnung (9) für die Behälterverschlüsse (2) zugewandt ist.

10. Vorrichtung (1) nach Anspruch 8 oder 9, **dadurch gekennzeichnet, dass** die Auffangeinheit (10) verstellbar, insbesondere höhen- und/oder winkelverstellbar, an dem Förderkanal (4) angeordnet ist und dazu zumindest ein verstellbares Tragelement (16) zur tragenden Halterung zumindest des Fangrohrstücks (14) vorgesehen ist.

11. Vorrichtung (1) nach einem der vorhergehenden Ansprüche, **dadurch gekennzeichnet, dass** die den Kanalboden bildende Gleitfläche (11) zur gleitenden Anlage einer Oberseite der Behälterverschlüsse (2) ausgebildet ist und/oder dass die erste und zweite Führungsfläche (5, 6) jeweils einen Wandungsabschnitt des Förderkanals (4) bilden und zur gleitenden Anlage einer Seitenfläche der Behälterverschlüsse (2) ausgebildet sind.

12. Vorrichtung (1) nach einem der vorhergehenden Ansprüche, **dadurch gekennzeichnet, dass** das drehbewegliche Umlenkelement (8) manuell betätigbar ist und mittels manuell ausgeführter Drehbewegung zwischen der Grundstellung (P1) und der Ausleitstellung (P2) bewegbar ist.

13. Vorrichtung (1) nach einem der vorhergehenden Ansprüche 1 bis 11, **dadurch gekennzeichnet, dass** das drehbewegliche Umlenkelement (8) automatisiert betätigbar ist und mittels automatisiert ausgeführter Drehbewegung zwischen der Grundstellung (P1) und der Ausleitstellung (P2) bewegbar ist.

14. Vorrichtung (1) nach Anspruch 13, **dadurch gekennzeichnet, dass** die Ausleiteinrichtung (3) für die automatisierte Betätigung des Umlenkelements (8) einen mit dem Umlenkelement (8) zusammenwirkenden Antrieb, insbesondere einen Arbeitszylinder (20), aufweist, der dazu ausgebildet ist, die Drehbewegung zum Bewegen des Umlenkelementes (8) zwischen der Grundstellung (P1) und der Ausleitstellung (P2) auszuführen.

15. Vorrichtung (1) nach Anspruch 14, **dadurch gekennzeichnet, dass** das drehbewegliche Umlenkelement (8) gesteuert bewegbar ist, wobei der Antrieb über eine bei der Vorrichtung (1) vorgesehene Steuereinrichtung steuerbar ist und dazu mit der Steuereinrichtung in kommunizierender Verbindung steht.

16. Behälterbehandlungsanlage umfassend einen Verschließer zum Verschließen von Behältern mit Behälterverschlüssen (2) sowie eine mit dem Verschließer verbundene Vorrichtung (1) zum Fördern der Behälterverschlüsse (2) zu dem Verschließer,
**dadurch gekennzeichnet, dass** die Vorrichtung (1) zum Fördern der Behälterverschlüsse (2) nach einem der voranstehenden Ansprüche ausgebildet ist.

17. Verfahren zum Fördern von Behälterverschlüssen (2), insbesondere von Kronenkorken, bei dem die Behälterverschlüsse (2) in einem sich entlang einer Hauptachse (HA) erstreckenden Förderkanal (4) einer Vorrichtung (1) zum Fördern von Behälterverschlüssen (2) in einer Förderrichtung (FR) gefördert werden, wobei die Behälterverschlüsse (2) an einer einen Kanalboden bildenden Gleitfläche (11) gleitend anliegen und über wenigstens eine erste und zweite Führungsfläche (5, 6), die gegenüberliegend seitlich entlang des Kanalbodens angeordnet sind, seitlich geführt werden, und bei dem die Behälterverschlüsse (2) zum Entleeren des Förderkanals (4) mittels einer Ausleiteinrichtung (3) der besagten Vorrichtung (1) aus deren Förderkanal (4) ausgeleitet werden, und wobei zum Ausleiten der Behälterverschlüsse (2) ein Umlenkelement (8) einer Umlenkanordnung (7) der Ausleiteinrichtung (3) mittels einer Drehbewegung von einer Grundstellung (P1) in eine Ausleitstellung (P2) bewegt wird und dadurch seitlich am Förderkanal (4) eine Auslassöffnung (9) für die Behälterverschlüsse (2) freigegeben wird, wobei die Behälterverschlüsse (2) durch das in Ausleitstellung (P2) befindliche Umlenkelement (8) umgeleitet und in einer Ausleitrichtung (AR) zur Auslassöffnung (9) gefördert werden, **dadurch gekennzeichnet, dass** das Umlenkelement (8) zumindest einen eine Grundkörperachse (GA) aufweisenden Grundkörper umfasst, wobei der Grundkörper dazu ausgebildet ist, zumindest ein den Kanalboden bildendes Bauteil des Förderkanals (4) wenigstens abschnittsweise zu umgreifen und wobei der Grundkörper dazu innenseitig einen freien Raum zur wenigstens teilweisen Aufnahme des den Kanalboden bildenden Bauteils des Förderkanals (4) aufweist.

18. Verfahren nach Anspruch 17, **dadurch gekennzeichnet, dass** die aus der Auslassöffnung (9) austretenden Behälterverschlüsse (2) mittels einer Auffangeinheit (10) der Ausleiteinrichtung (3) aufgefangen werden.

19. Verfahren nach Anspruch 17 oder 18, **dadurch gekennzeichnet, dass** die Behälterverschlüsse (2) vor dem Drehen des Umlenkelements (8) mittels einer bei der Vorrichtung (1) vorgesehenen und in Förderrichtung (FR) vor dem Umlenkelement (8) angeordneten Stoppvorrichtung (12) gestoppt werden und nach dem Drehen des Umlenkelements (8) wieder von der Stoppvorrichtung (12) freigegeben werden und dass vorzugsweise nach dem Stoppen der Behälterverschlüsse (2) und vor dem Drehen des Umlenkelements (8) die im Förderkanal (4) stromabwärts der Stoppvorrichtung (12) anwesenden Behälterverschlüsse (2) durch einen Leerlaufprozess eines mit der besagten Vorrichtung (1) verbundenen Behälterverschließers aus dem Förderkanal (4) gefördert werden.

## Claims

1. Apparatus (1) for conveying container closures (2), comprising a conveying channel (4), which extends along a main axis (HA) and has at least one sliding surface (11), which forms a channel base, and at least a first and a second guiding surface (5, 6), wherein the guiding surfaces (5, 6) are arranged opposite one another laterally along the channel base for the purpose of guiding the container closures (2) conveyed in a conveying direction (FR),
wherein the apparatus (1) comprises a leading-out device (3) for leading the container closures (2) out of the conveying channel (4),
wherein the leading-out device (3) has at least one deflecting arrangement (7) with at least one rotatable deflecting element (8), wherein the deflecting element (8) can be moved from at least one basic position (P1) into at least one leading-out position (P2) by means of rotational movement about an axis of rotation (DA), wherein the deflecting element (8) has a first and a second wall (8.1, 8.2), which in the basic position (P1) of the deflecting element (8) form a respective first and second guiding-surface portion (5a, 6a) as part of the first and the second guiding surface (5, 6) of the conveying channel (4), and wherein, in the leading-out position (P2), the deflecting element (8) exposes an outlet opening (9) in the conveying channel (4), **characterised in that** the deflecting element (8) comprises at least one basic body, which has a basic body axis (GA), wherein the basic body is configured such as to surround at least in sections a component of the conveying channel (4) which forms the channel base, and wherein, for this purpose, the basic body has a free space in its interior for the at least partial reception of the component of the conveying channel (4) which forms the channel base.

2. Apparatus (1) according to claim 1, **characterised in that** the axis of rotation (DA) of the rotationally movable deflecting element (8) runs essentially perpendicular to the sliding surface (11) of the conveying channel (4).

3. Apparatus (1) according to claim 1 or 2, **characterised in that**, in order to carry out the rotation from the basic position (P1) into the leading-out position (P2), the rotationally movable deflecting element (8) can be rotated by a rotational movement in a predetermined direction of rotation (DR) and over a predetermined angular distance, in particular over an angular distance of less than 90°.

4. Apparatus (1) according to any one of the preceding claims, **characterised in that** the second wall (8.2) of the rotationally movable deflecting element (8), in the leading-out position (P2), traverses the conveying channel (4), and, as a result, at least the second guiding-surface portion (6a) of the deflecting element (8) forms a guiding surface, wherein the guiding surface diverts the container closures (2) out of the conveying direction (FR) into an outlet direction (AR), and in this situation blocks any further transport in the conveying direction (FR).

5. Apparatus (1) according to any one of the preceding claims, **characterised in that** provision is further made for at least one stopping device (12), arranged at the conveying channel (4) in the conveying direction (FR), upstream of the rotationally movable deflecting element (8), for stopping the container closures (2).

6. Apparatus (1) according to claim 5, **characterised in that** the stopping device (12) is configured as a spring-type clamping element (13) secured to the conveying channel (4) such as to undergo a pivoting movement, or that the stopping device (12) is formed by a closure stopper (17), which comprises at least one stopping element which can be driven in a linear manner.

7. Apparatus (1) according to any one of the preceding claims, **characterised in that** the deflecting arrangement (7) comprises at least one securing or locking means (19) for securing the deflecting element (8) in at least the basic position (P1) and/or the leading-out position (P2).

8. Apparatus (1) according to any one of the preceding claims, **characterised in that** the leading-out device (3) further comprises a catching unit (10) for catching container closures (2) emerging from the outlet opening (9).

9. Apparatus (1) according to claim 8, **characterised in that** catching unit (10) comprises at least one catchment tube piece (14) with a catchment mouth (15), wherein the catchment tube piece (14) is arranged and aligned relative to the conveying channel (4) in such a way that the catchment mouth (15) of the catchment tube piece (14) faces towards the outlet opening (9) for the container closures (2), formed by the deflecting element (8) located in the leading-out position (P2).

10. Apparatus (1) according to claim 8 or 9, **characterised in that** the catchment unit (10) is arranged at the conveying channel (4) as adjustable, in particular adjustable in height and/or angle, and for this purpose at least one adjustable carrier element (16) is provided for the load-bearing holding of at least the catchment tube piece (14).

11. Apparatus (1) according to any one of the preceding claims, **characterised in that** the sliding surface (11) forming the channel base is configured for the sliding contact with an upper side of the container closures (2), and/or that the first and second guiding surfaces (5, 6) in each case form a wall section of the conveying channel (4) and are configured to provide a sliding contact with a side surface of the container closures (2).

12. Apparatus (1) according to any one of the preceding claims, **characterised in that** the rotationally movable deflecting element (8) can be actuated manually and can be moved by means of a manually performed rotational movement between the basic position (P1) and the leading-out position (P2).

13. Apparatus (1) according to any one of claims 1 to 11, **characterised in that** the rotationally movable deflecting element (8) can be actuated in an automated manner and can be moved by means of an automated rotational movement between the basic position (P1) and the leading-out position (P2).

14. Apparatus (1) according to claim 13, **characterised in that** the leading-out device (3) comprises, for the automated actuation of the deflecting element (8), a drive which interacts with the deflecting element (8), in particular a working cylinder (20), which is configured such as to carry out the rotational movement for moving the deflecting element (8) between the basic position (P1) and the leading-out position (P2).

15. Apparatus (1) according to claim 14, **characterised in that** the rotationally movable deflecting element (8) can be moved in a controlled manner, wherein the drive can be controlled by means of the control device provided for the apparatus (1), and for this purpose is in a communicating connection with the control device.

16. Container handling system comprising a closing device for closing containers with container closures (2), as well as an apparatus (1) connected to the closing device for conveying the container closures (2) to the closing device,
**characterised in that** the apparatus (1) for conveying the container closures (2) is configured in accordance with any one of the preceding claims.

17. Method for conveying container closures (2), in particular of crown corks, wherein the container closures (2) are conveyed in a conveying channel (4), extending along a main axis (HA), of an apparatus (1) for conveying container closures (2) in a conveying direction (FR), wherein the container closures (2) are in sliding contact with a sliding surface (11) forming a channel base, and are guided laterally over at least one first and second guiding surfaces (5, 6), which are arranged opposite one another laterally along the channel base, and wherein, in order to empty the conveying channel (4), the container closures (2) are guided by means of a leading-out device (3) of the said apparatus (1) out of its conveying channel (4), and wherein, in order to lead out the container closures (2), a deflecting element (8) of a deflecting arrangement (7) of the leading-out device (3) is moved by means of a rotational movement from a basic position (P1) into a leading-out position (P2), and, as a result, exposes laterally on the conveying channel (4) an outlet opening (9) for the container closures (2), wherein the container closures (2) are diverted by the deflecting element (8) located in the leading-out position (P2), and are conveyed in an outlet direction (AR) to the outlet opening (9), **characterised in that** the deflecting element (8) comprises at least one basic body which has a basic body axis (GA), wherein the basic body is configured such as to surround at least in sections a component of the conveying channel (4) which forms the channel base, and wherein, for this purpose, the basic body has a free space in its interior for the at least partial reception of the component of the conveying channel (4) which forms the channel base.

18. Method according to claim 17, **characterised in that** the container closures (2) emerging from the outlet opening (9) are caught by means of a catching unit (10) of the leading-out device (3).

19. Method according to claim 17 or 18, **characterised in that** the container closures (2) are stopped before the rotation of the deflecting element (8) by means of a stopping device (12), provided at the apparatus (1) and arranged in the conveying direction (FR) upstream of the deflecting element (8), and, after the rotation of the deflecting element (8), are released again by the stopping device (12), and that, preferably after the stopping of the container closures (2) and before the rotation of the deflecting element (8), the container closures (2) present in the conveying channel (4) downstream of the stopping device (12) are conveyed out of the conveying channel (4) by means of an empty running process of a container closer which is connected to the said apparatus (1).

## Revendications

1. Dispositif (1) de convoyage de fermetures de récipient (2) comprenant un canal de convoyage (4) s'étendant le long d'un axe principal (HA) avec au moins une surface de glissement (11) formant un fond de canal et avec au moins une première et une deuxième surface de guidage (5, 6), dans lequel les surfaces de guidage (5, 6) destinées à guider les fermetures de récipient (2) convoyées dans une direction de convoyage (FR) sont disposées latéralement à l'opposé le long du fond de canal,
dans lequel le dispositif (1) comprend un système de sortie (3) pour faire sortir les fermetures de récipient (2) hors du canal de convoyage (4),
dans lequel le système de sortie (3) présente au moins un ensemble de déviation (7) avec au moins un élément de déviation (8) mobile en rotation, dans lequel l'élément de déviation (8) peut être déplacé depuis au moins une position de base (P1) dans au moins une position de sortie (P2) au moyen d'un mouvement de rotation autour d'un axe de rotation (DA), dans lequel l'élément de déviation (8) présente une première et une deuxième paroi (8.1, 8.2) qui, dans la position de base (P1) de l'élément de déviation (8), forment respectivement une première et une deuxième section de surface de guidage (5a, 6a) comme faisant partie de la première et de la deuxième surface de guidage (5, 6) du canal de convoyage (4) et dans lequel l'élément de déviation (8) libère dans la position de sortie (P2) une ouverture d'évacuation (9) sur le canal de convoyage (4), **caractérisé en ce que** l'élément de déviation (8) comprend au moins un corps de base présentant un axe de corps de base (GA), dans lequel le corps de base est réalisé pour enserrer au moins par endroits au moins un composant du canal de convoyage (4) formant le fond du canal et dans lequel le corps de base présente à cet effet côté intérieur un espace libre pour recevoir au moins en partie le composant du canal de convoyage (4) formant le fond de canal.

2. Dispositif (1) selon la revendication 1, **caractérisé en ce que** l'axe de rotation (DA) de l'élément de déviation (8) mobile en rotation est sensiblement perpendiculaire à la surface de glissement (11) du canal de convoyage (4).

3. Dispositif (1) selon la revendication 1 ou 2, **caractérisé en ce que** l'élément de déviation (8) mobile en rotation peut être tourné avec un mouvement de rotation dans une direction de rotation (DR) prédéfinie et sur une distance angulaire prédéfinie, en particulier sur une distance angulaire inférieure à 90°, pour exécuter la rotation depuis la position de base (P1) dans la position de sortie (P2).

4. Dispositif (1) selon l'une quelconque des revendications précédentes, **caractérisé en ce que** la deuxième paroi (8.2) de l'élément de déviation (8) mobile en rotation traverse le canal de convoyage (4) dans la position de sortie (P2) et ainsi au moins la deuxième section de surface de guidage (6a) de l'élément de déviation (8) forme une surface d'acheminement, dans lequel la surface d'acheminement dévie les fermetures de récipient (2) hors de la direction de convoyage (FR) vers une direction d'évacuation (AR) et bloque ce faisant un transport ultérieur dans la direction de convoyage (FR).

5. Dispositif (1) selon l'une quelconque des revendications précédentes, **caractérisé en ce qu'**en outre au moins un dispositif d'arrêt (12) disposé dans la direction de convoyage (FR) devant l'élément de déviation (8) mobile en rotation, destiné à arrêter les fermetures de récipient (2) est prévu sur le canal de convoyage (4).

6. Dispositif (1) selon la revendication 5, **caractérisé en ce que** le dispositif d'arrêt (12) est réalisé comme un élément de serrage (13) de type ressort fixé de manière mobile par pivotement sur le canal de convoyage (4) ou **en ce que** le dispositif d'arrêt (12) est formé par une butée de fermeture (17) qui comprend au moins un élément d'arrêt pouvant être entraîné de manière linéaire.

7. Dispositif (1) selon l'une quelconque des revendications précédentes, **caractérisé en ce que** l'ensemble de déviation (7) comprend au moins un moyen de blocage ou d'arrêt (19) pour le blocage de l'élément de déviation (8) dans au moins la position de base (P1) et/ou la position de sortie (P2).

8. Dispositif (1) selon l'une quelconque des revendications précédentes, **caractérisé en ce que** le système de sortie (3) présente en outre une unité d'interception (10) pour intercepter des fermetures de récipient (2) sortant de l'ouverture d'évacuation (9).

9. Dispositif (1) selon la revendication 8, **caractérisé en ce que** l'unité d'interception (10) présente au moins un morceau de tube de rattrapage (14) avec une embouchure d'interception (15), dans lequel le morceau de tube de rattrapage (14) est disposé et orienté par rapport au canal de convoyage (4) de telle sorte que l'embouchure d'interception (15) du morceau de tube de rattrapage (14) est tournée vers l'ouverture d'évacuation (9) formée par l'élément de déviation (8) se trouvant en position de sortie (P2) pour les fermetures de récipient (2).

10. Dispositif (1) selon la revendication 8 ou 9, **caractérisé en ce que** l'unité d'interception (10) est disposée sur le canal de convoyage (4) de manière ajustable, en particulier avec une hauteur et/ou un angle ajustables, et à cet effet, au moins un élément porteur (16) ajustable est prévu pour le support porteur au moins de la pièce de tube de rattrapage (14).

11. Dispositif (1) selon l'une quelconque des revendications précédentes, **caractérisé en ce que** la surface de glissement (11) formant le fond de canal est réalisée pour l'appui glissant d'une face supérieure des fermetures de récipient (2) et/ou **en ce que** les première et deuxième surfaces de guidage (5, 6) forment respectivement une section de paroi du canal de convoyage (4) et sont réalisées pour l'appui glissant d'une surface latérale des fermetures de récipient (2).

12. Dispositif (1) selon l'une quelconque des revendications précédentes, **caractérisé en ce que** l'élément de déviation (8) mobile en rotation peut être actionné manuellement et peut être déplacé entre la position de base (P1) et la position de sortie (P2) au moyen d'un déplacement de rotation exécuté manuellement.

13. Dispositif (1) selon l'une quelconque des revendications précédentes 1 à 11, **caractérisé en ce que** l'élément de déviation (8) mobile en rotation peut être actionné de manière automatisée et peut être déplacé entre la position de base (P1) et la position de sortie (P2) au moyen d'un déplacement de rotation exécuté de manière automatisée.

14. Dispositif (1) selon la revendication 13, **caractérisé en ce que** le dispositif de sortie (3) pour l'actionnement automatisé de l'élément de déviation (8) présente un entraînement coopérant avec l'élément de déviation (8), en particulier un cylindre de travail (20), qui est réalisé pour exécuter le déplacement de rotation pour déplacer l'élément de déviation (8) entre la position de base (P1) et la position de sortie (P2).

15. Dispositif (1) selon la revendication 14, **caractérisé en ce que** l'élément de déviation (8) mobile en rotation peut être déplacé de manière commandée, dans lequel l'entraînement peut être commandé par l'intermédiaire d'un système de commande prévu à proximité du dispositif (1) et est à cet effet en communication avec le système de commande.

16. Installation de traitement de récipients comprenant une machine de fermeture pour fermer des récipients avec des fermetures de récipient (2) ainsi qu'un dispositif (1) relié à la machine de fermeture pour convoyer les fermetures de récipient (2) vers la machine de fermeture,
**caractérisée en ce que** le dispositif (1) de convoyage des fermetures de récipient (2) est réalisé selon l'une quelconque des revendications précédentes.

17. Procédé de convoyage de fermetures de récipient (2), en particulier de bouchons couronnes, où les fermetures de récipient (2) sont convoyées dans un canal de convoyage (4), s'étendant le long d'un axe principal (HA), d'un dispositif (1) de convoyage de fermetures de récipient (2) dans une direction de convoyage (FR), dans lequel les fermetures de récipient (2) sont en appui glissant sur une surface de glissement (11) formant un fond de canal et sont guidées latéralement par l'intermédiaire d'au moins une première et une deuxième surface de guidage (5, 6), qui sont disposées latéralement à l'opposé le long du fond de canal, et où les fermetures de récipient (2) sont sorties hors du canal de convoyage (4) dudit dispositif (1) au moyen d'un système de sortie (3) de celui-ci pour vider le canal de convoyage (4), et dans lequel
pour sortir les fermetures de récipient (2), un élément de déviation (8) d'un ensemble de déviation (7) du système de sortie (3) est déplacé au moyen d'un déplacement de rotation depuis une position de base (P1) dans une position de sortie (P2) et une ouverture d'évacuation (9) est ainsi libérée latéralement sur le canal de convoyage (4) pour les fermetures de récipient (2), dans lequel les fermetures de récipient (2) sont déviées par l'élément de déviation (8) se trouvant en position de sortie (P2) et sont convoyées dans une direction de sortie (AR) vers l'ouverture d'évacuation (9), **caractérisé en ce que**
l'élément de déviation (8) comprend au moins un corps de base présentant un axe de corps de base (GA), dans lequel le corps de base est réalisé pour enserrer au moins par endroits un composant du canal de convoyage (4) formant le fond de canal et dans lequel le corps de base présente à cet effet côté intérieur un espace libre pour recevoir au moins en partie le composant du canal de convoyage (4) formant le fond de canal.

18. Procédé selon la revendication 17, **caractérisé en ce que** les fermetures de récipient (2) sortant de l'ouverture d'évacuation (9) sont interceptées au moyen d'une unité d'interception (10) du système de sortie (3).

19. Procédé selon la revendication 17 ou 18, **caractérisé en ce que** les fermetures de récipient (2) sont arrêtées avant la rotation de l'élément de déviation (8) au moyen d'un dispositif d'arrêt (12) prévu à proximité du dispositif (1) et disposé dans la direction de convoyage (FR) devant l'élément de déviation (8) et sont de nouveau libérées par le dispositif d'arrêt (12) après la rotation de l'élément de déviation (8) et que de préférence après l'arrêt des fermetures de récipient (2) et avant la rotation de l'élément de déviation (8), les fermetures de récipient (2) présentes dans le canal de convoyage (4) en aval du dispositif d'arrêt (12) sont convoyées hors du canal de convoyage (4) par un processus à vide d'une machine de fermeture de récipient reliée audit dispositif (1).
